# EUROPÄISCHE PATENTSCHRIFT

(11) **EP 3 623 593 B1**
(45) Veröffentlichungstag und Bekanntmachung des Hinweises auf die Patenterteilung: **16.06.2021**
(21) Anmeldenummer: 19197805.5
(22) Anmeldetag: 17.09.2019
(51) Int. Cl.: F01N 1/02, F01N 1/00, F01N 1/08, F01N 3/033

(54) **SCHALLDÄMPFER FÜR EINEN ABGASSTRANG EINES KRAFTFAHRZEUGS UND KRAFTFAHRZEUG MIT EINEM SCHALLDÄMPFER**
SILENCER FOR AN EXHAUST LINE OF A MOTOR VEHICLE AND MOTOR VEHICLE COMPRISING A SILENCER
SILENCIEUX POUR UNE CONDUITE DE GAZ D'ÉCHAPPEMENT D'UN VÉHICULE AUTOMOBILE ET VÉHICULE AUTOMOBILE DOTÉ D'UN SILENCIEUX

(30) Priorität: 17.09.2018 DE 102018122637
(43) Veröffentlichungstag der Anmeldung: 18.03.2020
(73) Patentinhaber: Faurecia Emissions Control Technologies, Germany GmbH, 86154 Augsburg (DE)
(72) Erfinder: Kienle, Boris, 86154 Augsburg (DE); Fiessinger, Hans Peter, 86154 Augsburg (DE); Regenold, Klaus, 86154 Augsburg (DE); Lungfiel, Andre, 86154 Augsburg (DE)
(74) Vertreter: Prinz & Partner mbB

(56) Entgegenhaltungen:
- DE-A1- 4 431 484
- US-A- 4 961 314

## Beschreibung

Die Erfindung betrifft einen Schalldämpfer für einen Abgasstrang eines Kraftfahrzeugs und ein Kraftfahrzeug mit zumindest einem Schalldämpfer.

Im Abgasstrang eines Kraftfahrzeugs erfolgt die Behandlung der Verbrennungsgase, die aus dem Verbrennungsmotor abgeleitet werden, um Emissionen zu verringern. Die Schadstoffe werden hierbei mittels Partikelfiltern und Katalysatoren auf chemischem, katalytischem und/oder mechanischem Weg dem Abgas entzogen bzw. in andere Stoffe umgewandelt.

Ferner ist es bekannt, Schalldämpfer in einem Abgasstrang einzusetzen, um die Schallemissionen zu reduzieren. Schalldämpfer sind in verschieden Ausführungsformen mit unterschiedlichen Wirkprinzipien bekannt, beispielsweise in Form von Reflexions-, Absorptions- oder Resonanzschalldämpfer.

Die US 4 961 314 A zeigt eine Abgasreinigungsanlage mit einem stromaufwärtigen Abschnitt, in dem ein Substrat zur Abgasreinigung aufgenommen ist, und einen stromabwärtigen Abschnitt, in dem ein Schalldämpfer vorgesehen ist.

Aus der DE 44 31 484 A1 ist ein Schalldämpfer mit mehreren Kammern und einer integrierten Abgasreinigungsstufe bekannt, die einen Filtermonolithen aufweist. Der Filtermonolith ist hierbei innerhalb der Eintrittskammer angeordnet und wird von dieser in Umfangsrichtung umgeben.

Im Automobilbereich ist man stets bestrebt die Effizienz der Kraftfahrzeuge in allen Bereichen zu verbessern, insbesondere durch Gewichtsreduktion und Bauraumoptimierung.

Aufgabe der Erfindung ist es, einen Schalldämpfer für einen Abgasstrang eines Kraftfahrzeugs bereitzustellen, der zu einem kompakteren Aufbau des Abgasstrangs führt.

Zur Lösung der Aufgabe ist ein Schalldämpfer für einen Abgasstrang eines Kraftfahrzeugs vorgesehen. Dabei umfasst der Schalldämpfer ein Außengehäuse, das zumindest eine Einlassöffnung und zumindest eine Auslassöffnung für Abgas aufweist, eine Schalldämpferkammer und einen abgasdurchströmten Filtermonolithen, insbesondere eines Katalysators oder Partikelfilters (DPF, GPF). Hierbei ist der Filtermonolith von der Schalldämpferkammer umfangsmäßig umgeben, wodurch der Filtermonolith zumindest teilweise innerhalb der Schalldämpferkammer angeordnet ist. Die Schalldämpferkammer ist durch zumindest eine perforierte radiale Zwischenwand in Schalldämpferteilkammern unterteilt, wodurch die Eigenschaften des Schalldämpfers flexibler auf seine Anforderungen, insbesondere im Zusammenhang mit der Schalldämpfung, abgestimmt werden können. Um den Montageaufwand gering zu halten, hat das Außengehäuse des Schalldämpfers einen Außenmantel, der aus mehreren aneinander befestigten Einzelsegmenten zusammengesetzt ist. Dabei sind die Einzelsegmente den Schalldämpferteilkammern zugeordnet. Ferner ist durch diese Gestaltung der Filtermonolith Teil des Schalldämpfers, wobei der Bauraum um den Filtermonolith herum zumindest teilweise für eine Schalldämpferkammer des Schalldämpfers vorgesehen ist. Durch diese ineinander verschachtelte Bauweise kann der erforderliche Bauraum des Abgasstrangs mittels des erfindungsgemäßen Schalldämpfers reduziert werden.

Gemäß einer Ausführungsform ist der Filtermonolith vollständig innerhalb der Schalldämpferkammer angeordnet, wodurch der Schalldämpfer und damit der Abgasstrang besonders kompakt gestaltet sein kann.

Es kann vorgesehen sein, dass der Schalldämpfer eine die Einlassöffnung aufweisende stromaufwärtige Stirnwand und eine die Auslassöffnung aufweisende stromabwärtige Stirnwand sowie einen Außenmantel umfasst, der sich von der stromaufwärtigen Stirnwand zur stromabwärtigen Stirnwand erstreckt und diese verbindet. Dieser mehrteilige Aufbau hat den Vorteil, dass der Schalldämpfer kostengünstig herstellbar ist.

Hierbei kann die Schalldämpferkammer einerseits von der stromaufwärtigen Stirnwand und/oder von der stromabwärtigen Stirnwand und andererseits von dem Außenmantel begrenzt werden, so dass die Größe der Schalldämpferkammer über die Wahl entsprechend dimensionierter Stirnwände und/oder eines entsprechend dimensionierten Außenmantels in einfacher Weise an unterschiedliche Anforderungen angepasst werden kann, beispielsweise an unterschiedlich große Filtermonolithen.

Um das Abgas in definierter Weise durch den Schalldämpfer zu leiten, ist es von Vorteil, wenn eine sich zumindest von der Einlassöffnung in das Gehäuseinnere erstreckende erste Abgasleitung und/oder eine sich vom Monolithen zumindest abschnittsweise zur Auslassöffnung erstreckende zweite Abgasleitung vorgesehen sind, die sich vorzugsweise durch ihre zugeordneten Stirnwände erstrecken.

Gemäß einer weiteren Ausführungsform ist die Schalldämpferkammer in mehrere Schalldämpferteilkammern unterteilt, wobei die zweite Abgasleitung durch mehrere der Schalldämpferteilkammern verläuft und insbesondere abschnittsweise unterbrochen ist. Auf diese Weise können die Schalldämpferteilkammern mit dem im Betrieb durch die Abgasleitung strömenden Abgas in geeigneter Weise gekoppelt werden, um eine besonders gute Reduktion der Schallemissionen zu gewährleisten.

Es kann vorgesehen sein, dass die zweite Abgasleitung über eine Perforation zur Schalldämpferkammer offen ist, wodurch eine gute Kopplung des im Betrieb durch die Abgasleitung strömenden Abgases mit der Schalldämpferkammer und damit eine gute Schalldämpfung sichergestellt werden kann.

In einer Ausführungsform ist der Filtermonolith umfangsseitig und stirnseitig von einem Monolithgehäuse umgeben und in dem Monolithgehäuse untergebracht. Die Einlassöffnung ist dabei strömungsmäßig direkt mit dem Inneren des Monolithgehäuses gekoppelt, sodass Abgas zuerst in das Monolithgehäuse strömt, bevor es die Schalldämpferkammer erreicht. Das bedeutet, dass das in den Schalldämpfer strömende Abgas zuerst durch den Filtermonolith geleitet und erst anschließend mit der Schalldämpferkammer gekoppelt wird. Somit erfolgt die Reduktion der Schallemission im Wesentlichen nachdem das saubere Abgas den Filtermonolithen verlassen hat, wodurch das Abgas weniger negative Einflüsse (z. B. Ablagerungen) auf den Schalldämpfer hat.

Hierbei kann die zweite Abgasleitung vom Monolithgehäuse ausgehen und dazu eingerichtet sein, das Abgas aus dem Monolithgehäuse zur Auslassöffnung auf einem definierten, kurzen Weg zu leiten.

Es ist von Vorteil, wenn das Monolithgehäuse eine stromaufwärtige, konusförmige und eine stromabwärtige, konusförmige Stirnwand hat, wobei die zweite Abgasleitung von der stromabwärtigen, konusförmigen Stirnwand ausgeht und die stromabwärtige, konusförmige Stirnwand zusätzliche Öffnungen entfernt von der zweiten Abgasleitung hat, die in die Schalldämpferkammer münden. Das Monolithgehäuse stellt sicher, dass der Monolith perfekt im Schalldämpfer gehaltert ist und das Abgas im Wesentlichen vollständig durch den Filtermonolithen geleitet und somit gefiltert bzw. behandelt wird, während die zusätzlichen Öffnungen in der Abgasleitung eine definierte Kopplung des Abgases mit der Schalldämpferkammer und damit eine gute Schalldämpfung gewährleisten.

In einer weiteren Ausführungsform wirken die Schalldämpferteilkammern als Resonatorkammern.

Es kann vorgesehen sein, dass die zumindest eine Zwischenwand oder eine von mehreren Zwischenwänden radial außen am Außenmantel des Außengehäuses und radial innen am Monolithgehäuse, insbesondere an einem Außenmantel des Monolithgehäuses oder an einer abgasseitigen, konischen Stirnwand des Monolithgehäuses oder an einer Abgasleitung befestigt ist, die vom Monolithgehäuse ausgeht und Gas aus dem Monolithgehäuse zur Auslassöffnung führt. Die Abgasleitung ist insbesondere die vorgenannte zweite Abgasleitung. Diese Gestaltung hat den Vorteil, dass die auf diese Weise gebildeten Schalldämpferteilkammern das Monolithgehäuse umfangsmäßig umgeben, so dass der Bauraum effektiv genutzt ist. Ferner kann durch die Befestigung der Zwischenwand an den bereits vorhandenen Bauteilen Material und damit Masse eingespart werden. Des Weiteren kann hierdurch die strukturelle Festigkeit des Schalldämpfers erhöht werden.

Ferner kann vorgesehen sein, dass jede Schalldämpferteilkammer ihr eigenes Einzelsegment besitzt, d. h. dieses Einzelsegment hat eigene Bauteile.

Gemäß einer Ausführungsform ist die zumindest eine Zwischenwand, im Bereich der Befestigung benachbarter Einzelsegmente am Außenmantel befestigt, wodurch der Schalldämpfer sehr kompakt gestaltet sein kann.

Vorzugsweise sind alle Zwischenwände auf diese Weise jeweils mit den entsprechenden Einzelsegmenten fest verbunden.

Insbesondere kann hierbei die entsprechende Zwischenwand an den benachbarten Einzelsegmenten durch dasselbe Befestigungsmittel befestigt sein, mit dem die benachbarten Einzelsegmente aneinander befestigt sind, sodass das Befestigungsmittel die drei Bauteile miteinander verbindet. Auf diese Weise können die drei Bauteile mit einem einzigen Befestigungsmittel und insbesondere in einem Befestigungsschritt miteinander fest verbunden werden, sodass die Anzahl an Befestigungsmitteln bzw. Menge an Befestigungsmittel sowie der Montageaufwand reduziert sind. Beispiele hierfür sind eine drei Teile verbindende Schweißnaht oder eine Bördelung von drei Teilen.

Gemäß einer weiteren Ausführungsform ist eine Stirnwand des Außengehäuses radial innenseitig an einer konusförmigen Stirnwand oder an einem Außenmantel des Monolithgehäuses befestigt. Auf diese Weise sind keine zusätzlichen Verbindungsbauteile erforderlich, wodurch Material eingespart werden kann. Ferner wird hierdurch eine definierte Lage sowie sichere Befestigung des Monolithgehäuses und damit des Filtermonolithen im Außengehäuse sichergestellt.

Die Schalldämpferkammer kann mit Dämmmaterial gefüllt oder eine leere Resonatorkammer sein, d.h. eine Resonatorkammer ohne Dämmmaterial sein. Hierdurch können die Dämpfungseigenschaften des Schalldämpfers auf unterschiedliche Anforderungen abgestimmt sein.

Vorzugsweise wird die Schalldämpferkammer im Betrieb nicht von Abgas durchströmt, sondern wirkt beispielsweise als Resonator.

In einer Ausführungsform, in der die Schalldämpferkammer in Schalldämpferteilkammern unterteilt ist, können in dem Schalldämpfer verschiede Schalldämpferteilkammern mit unterschiedlicher Funktion kombiniert sein, insbesondere Schalldämpferteilkammern mit und ohne Dämmmaterial.

Ferner betrifft die Erfindung ein Kraftfahrzeug mit einem oder mehreren der erfindungsgemäßen Schalldämpfer.

Weitere Vorteile und Merkmale ergeben sich aus der nachfolgenden Beschreibung sowie aus den beigefügten Zeichnungen. In diesen zeigen:
- Figur 1 in einer perspektivischen Ansicht einen erfindungsgemäßen Schalldämpfer gemäß einer ersten Ausführungsform für ein erfindungsgemäßes Kraftfahrzeug,
- Figur 2 einen Ausschnitt des Schalldämpfers aus Figur 1 in einer schematischen Darstellung,
- Figur 3 in einer perspektivischen Ansicht einen Ausschnitt eines erfindungsgemäßen Schalldämpfers gemäß einer zweiten Ausführungsform,
- Figur 4 den Ausschnitt des Schalldämpfers aus Figur 3 in einer schematischen Darstellung,
- Figur 5 in einer schematischen Darstellung einen erfindungsgemäßen Schalldämpfer gemäß einer dritten Ausführungsform,
- Figur 6 in einer schematischen Darstellung einen nicht unter die Erfindung fallenden Schalldämpfer, und
- Figur 7 in einer schematischen Darstellung einen erfindungsgemäßen Schalldämpfer gemäß einer vierten Ausführungsform.

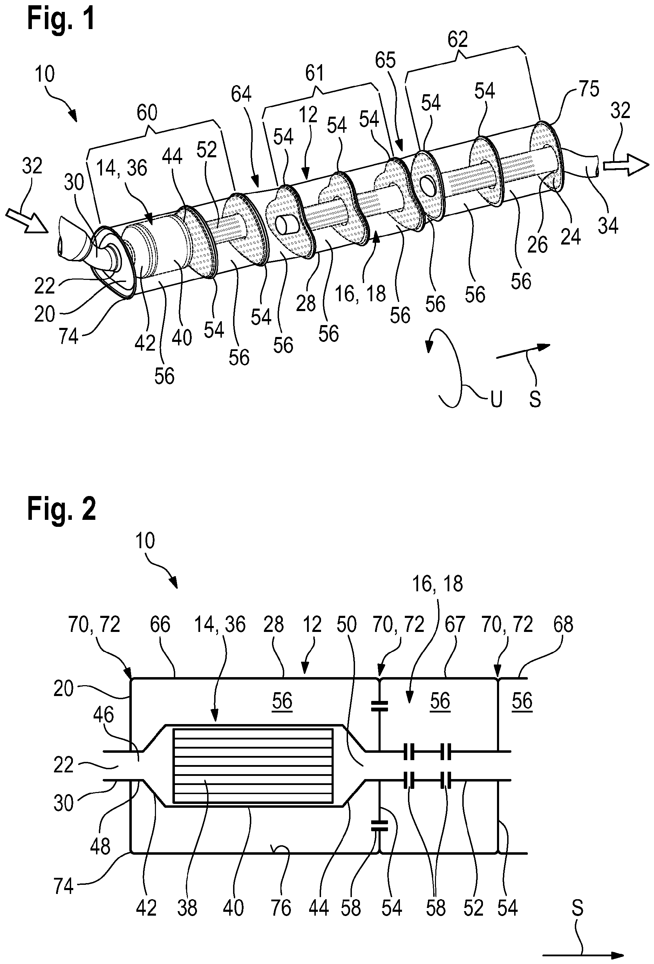

In Figur 1 ist ein Schalldämpfer 10 in einem Abgasstrang gezeigt, der für ein Kraftfahrzeug mit einem Verbrennungsmotor vorgesehen ist.

Der Schalldämpfer 10 umfasst ein Außengehäuse 12 sowie einen Filter 14 und eine Schalldämpferkammer 16, die im Gehäuseinneren 18 des Außengehäuses 12 angeordnet sind.

Das Außengehäuse 12 hat eine stromaufwärtige Stirnwand 20 mit einer Einlassöffnung 22, eine stromabwärtige Stirnwand 24 mit einer Auslassöffnung 26 sowie einen Außenmantel 28, der sich von der stromaufwärtigen Stirnwand 20 bis zur stromabwärtigen Stirnwand 24 erstreckt und umfangsmäßig komplett umläuft und das Außengehäuse 12 radial nach außen schließt.

Über die Einlassöffnung 22 ist der Schalldämpfer 10 mit einem Zuleitungsrohr 30 des Abgasstrangs gekoppelt, sodass im Betrieb des Kraftfahrzeugs Abgas 32 vom Verbrennungsmotor über die Einlassöffnung 22 in den Schalldämpfer 10 strömt. Das Abgas 32 durchströmt den Schalldämpfer 10 in Strömungsrichtung S und wird über die Auslassöffnung 26 in ein Ableitungsrohr 34 des Abgasstrangs geleitet, der beispielsweise in einen Auspuff des Kraftfahrzeugs mündet.

Die Schalldämpferkammer 16 wird hierbei durch den Außenmantel 28 sowie die beiden Stirnwände 20, 24 gebildet, die die Schalldämpferkammer 16 begrenzen.

Das bedeutet, die Schalldämpferkammer 16 erstreckt sich in Strömungsrichtung S von der stromaufwärtigen Stirnwand 20 bis zur stromabwärtigen Stirnwand 24 und damit im Wesentlich über den gesamten Schalldämpfer 10 in dieser Richtung.

Der Filter 14 hat ein separates Monolithgehäuse 36, in dem ein in Strömungsrichtung S abgasdurchströmbarer Filtermonolith 38 aufgenommen ist (siehe Figur 2).

Der Filter 14 ist beispielsweise ein Katalysator, ein Dieselpartikelfilter (DPF), ein Ottopartikelfilter (GPF) oder eine Kombination hiervon.

Der Filtermonolith 38 ist kreiszylinderförmig. Grundsätzlich kann der Filtermonolith 38 jedoch im Wesentlichen beliebig gestaltet sein.

Das Monolithgehäuse 36 umfasst einen Gehäuseaußenmantel 40, der den Filtermonolithen 38 in Umfangsrichtung U vollständig radial umgibt, sowie eine stromaufwärtige, konusförmige Stirnwand 42 und eine stromabwärtige, konusförmige Stirnwand 44, die den Filtermonolithen 38 jeweils in axialer Richtung begrenzen.

Die stromaufwärtige, konusförmige Stirnwand 42 hat eine erste Öffnung 46, über die der Filter 14 mittels einer ersten Abgasleitung 48 mit der Einlassöffnung 22 strömungsmäßig gekoppelt ist. Ferner hat die stromabwärtige, konusförmige Stirnwand 44 eine zweite Öffnung 50, über die der Filter 14 mittels einer zweiten Abgasleitung 52 mit der Auslassöffnung 26 strömungsmäßig gekoppelt ist.

Die erste Abgasleitung 48 erstreckt sich hierbei ununterbrochen, d.h. axial und umfangsmäßig geschlossen, von der Einlassöffnung 22 bis zur ersten Öffnung 46.

Die zweite Abgasleitung 52 erstreckt sich von der zweiten Öffnung 50 abschnittsweise unterbrochen bis zur Auslassöffnung 26.

In der dargestellten Ausführungsform haben die erste Abgasleitung 48 und die zweite Abgasleitung 52 einen kleineren Durchmesser als der Filtermonolith 38 und der Gehäuseaußenmantel 40. Die konusförmigen Stirnwände 42, 44 bilden hierbei jeweils einen Übergang zwischen den unterschiedlichen Durchmessern der Abgasleitungen 48, 52 und dem Gehäuseaußenmantel 40.

Grundsätzlich kann der Filtermonolith 38 und/oder das Monolithgehäuse 36 in einer weiteren Ausführungsform im Wesentlichen beliebig gestaltet sein.

Der Schalldämpfer 10 umfasst ferner mehrere perforierte Zwischenwände 54, die in Strömungsrichtung S beabstandet voneinander im Gehäuseinneren 18 angeordnet sind und die Schalldämpferkammer 16 in mehrere in Strömungsrichtung S benachbarte Schalldämpferteilkammern 56 unterteilt.

Die Zwischenwände 54 erstrecken sich radial zur Strömungsrichtung S vom Außenmantel 28 bis zu den abgasleitenden Bauteilen im Gehäuseinneren 18, die in dieser Ausführungsform durch die zweite Abgasleitung 52 gebildet sind.

Die Zwischenwände 54 erstrecken sich hierbei über die gesamte Querschnittsfläche zwischen der zweiten Abgasleitung 52 und dem Außenmantel 28, sodass die Schalldämpferteilkammer 56 durch die Zwischenwände 54 voneinander getrennt sind und nur über die Perforation 58 in den Zwischenwänden 54 und/oder durch die Perforation 58 der zweiten Abgasleitung 52 untereinander strömungsmäßig gekoppelt sind.

Hierbei erstreckt sich die zweite Abgasleitung 52 abschnittsweise jeweils durch mehrere in Strömungsrichtung S benachbarte Zwischenwände 54 und den dazwischen liegenden Schalldämpferteilkammer 56.

Die Schalldämpferteilkammern 56 und damit die Schalldämpferkammer werden nicht abgasdurchströmt, vielmehr dienen sie als Helmholtzkammern, in welchen Gas lediglich pulst.

Die zweite Abgasleitung 52 ist in den Abschnitten, die an Schalldämpferteilkammern 56 angrenzen, abschnittsweise perforiert, sodass im Betrieb des Kraftfahrzeugs das durch die zweite Abgasleitung 52 strömende Abgas 32 über die Perforation 58 mit den entsprechenden angrenzenden Schalldämpferteilkammern 56 strömungsmäßig gekoppelt ist.

Der Schalldämpfer 10 umfasst Zwischenwände 54 mit unterschiedlichen Konturen, wodurch der Schalldämpfer 10 in Strömungsrichtung S benachbarte Segmente 60, 61, 62 mit unterschiedlich geformten Querschnitten senkrecht zur Strömungsrichtung S aufweist.

Jedes Segment 60, 61, 62 umfasst hierbei jeweils drei Zwischenwände 54 bzw. zwei Zwischenwände 54 und eine Stirnwand 20, 24, die die gleiche Kontur aufweisen. Somit umfasst jedes Segment 60, 61, 62 zwei Schalldämpferteilkammern 56 mit einem konstanten Querschnitt.

Der Schalldämpfer 10 hat trichterförmige Verbindungssegmente 64, 65, die jeweils zwei in Strömungsrichtung S benachbarte Segmente 60, 61, 62 mit unterschiedlich geformten Querschnitten strömungsmäßig miteinander verbinden.

Die Zwischenwände 54 können im wesentlichen beliebige Konturen aufweisen, bevorzugt sind jedoch unrunde, ovale oder kreisförmige Konturen.

Ferner können die Abstände in Strömungsrichtung S zwischen benachbarten Zwischenwänden 54 unterschiedlich groß sein.

Des Weiteren können die Mittelachsen verschiedener Segmente 60, 61, 62 unterschiedlich angeordnet, insbesondere zueinander versetzt, sein.

In einer weiteren Ausführungsform kann der Schalldämpfer 10 eine beliebige Anzahl an Schalldämpferteilkammern 56, Segmenten 60, 61, 62 sowie Verbindungssegmenten 64, 65, aufweisen.

Die Größe und Form des Schalldämpfers 10 ist vorzugsweise an den im Kraftfahrzeug vorhandenen Bauraum und die Volumina der Schalldämpferteilkammern 56 und an die zu erzielende Schalldämpfung des Abgases 32 angepasst.

Die Schalldämpferteilkammern 56 sind in dieser Ausführungsform leere Resonatorkammern. Das bedeutet, der Schalldämpfer 10 ist ein Reso nanzschalldämpfer.

Alternativ kann der Schalldämpfer 10 ein Reflexionsschalldämpfer oder ein Absorptionsschalldämpfer sein. Ferner kann der Schalldämpfer 10 ein Schalldämpfer sein, bei dem die Wirkprinzipien der vorgenannten Schalldämpfertypen kombiniert sind.

In einer alternativen Ausführungsform kann eine beliebige Anzahl der Schalldämpferteilkammern 56 mit einem Dämmmaterial, insbesondere einem Schallabsorptionsmaterial, gefüllt sein und/oder nicht abgasdurchströmt sein.

Wie in Figur 2 dargestellt, ist der Außenmantel 28 in mehrere miteinander verbundene Einzelsegmente 66, 67, 68 unterteilt, die jeweils einer Schalldämpferteilkammer 56 zugeordnet sind und damit den Abschnitt des Außenmantels 28 für die entsprechende Schalldämpferteilkammer 56 bilden.

Jeweils zwei aneinander angrenzende Einzelsegmente 66, 67, 68 von in Strömungsrichtung S benachbarten Schalldämpferteilkammern 56 sowie die Zwischenwand 54, die die entsprechenden beiden Schalldämpferteilkammern 56 trennt, sind an einer in Umfangsrichtung U vollständig umlaufenden Verbindungsstelle 70 dicht und fest mittels eines Befestigungsmittels 72 miteinander verbunden.

Die aneinander angrenzenden Einzelsegmente 66, 67, 68 und die Zwischenwand 54 sind z. B. miteinander dreilagig verschweißt.

Somit ist das Befestigungsmittel 72 hier eine Schweißnaht, die sich durch die drei Lagen, gebildet aus den aneinander angrenzenden Einzelsegmente 66, 67, 68 und der Zwischenwand 54, erstreckt und diese auf diese Weise stoffschlüssig miteinander verbindet.

Die Stirnwände 20, 24 sind radial außen an den entsprechenden axialen Enden 74, 75 des Außenmantels 28 analog, jedoch nur zweilagig, mit dem Außenmantel 28 verbunden.

Radial innen ist die stromaufwärtige Stirnwand 20 mit der ersten Abgasleitung 48 verschweißt und damit vollständig in Umfangsrichtung U dicht und fest mit der ersten Abgasleitung 48 verbunden.

Die stromabwärtige Stirnwand 24 sowie die Zwischenwände 54 sind radial innen jeweils mit der zweiten Abgasleitung 52 verschweißt und damit vollständig in Umfangsrichtung U dicht und fest mit der zweiten Abgasleitung 52 verbunden.

In einer alternativen Ausführungsform können die Stirnwände 20, 24 und/oder die Zwischenwände 54 im Wesentlichen in beliebiger Weise an dem Außenmantel 28 und/oder der ersten Abgasleitung 48 bzw. der zweiten Abgasleitung 52 befestigt sein, insbesondere mittels Falzen, Schweißen oder Löten.

Zusätzlich oder alternativ können die Einzelsegmente 66, 67, 68 und die Zwischenwände 54 jeweils zweilagig miteinander verbunden sein.

Ferner können die Zwischenwände 54 in Umfangsrichtung U nur abschnittsweise an dem Außenmantel 28 und/oder der zweiten Abgasleitung 52 befestigt sein. Dies ist insbesondere dann der Fall, wenn sich die Perforation 58 bis zum inneren und/oder äußeren Rand der Zwischenwand 54 und damit bis zum Außenmantel 28 und/oder der zweiten Abgasleitung 52 erstreckt.

Der Außenmantel 28 hat beliebig viele Einzelsegmente 66, 67, 68. Der Außenmantel 28 hat eine Anzahl an Einzelsegmenten 66, 67, 68, die der Anzahl der Segmente 60, 61, 62 sowie der Anzahl der Verbindungssegmente 64, 65 entspricht, wobei jedem dieser Segmente 60, 61, 62, 64, 65 ein sprechendes Einzelsegment 66, 67, 68 zugeordnet ist.

Es können ein oder mehrere Zwischenwände 54 an Stellen im Gehäuseinneren 18 vorgesehen sein, an denen keine Einzelsegmente 66, 67, 68 aneinander angrenzen.

In diesen Fällen sind die Zwischenwände 54 radial außen an der Innenseite 76 des Außenmantels 28, insbesondere stoffschlüssig sowie vorzugsweise vollständig in Umfangsrichtung U, dicht und fest mit dem Außenmantel 28 verbunden.

Ferner können einzelne Zwischenwände 54 auch nur radial außen an dem Außenmantel 28 und/oder radial innen an der zweiten Abgasleitung 52 befestigt sein.

In der dargestellten Ausführungsform ist der Filter 14 radial innerhalb der an die stromaufwärtige Stirnwand 20 angrenzende Schalldämpferteilkammer 56 vollständig im Gehäuseinneren 18 angeordnet und begrenzt diese radial nach innen. Auf diese Weise ist der Filter 14 in Umfangsrichtung U vollständig von der angrenzenden Schalldämpferteilkammer 56 sowie teilweise in axialer Richtung umgeben.

In einer alternativen Ausführungsform kann der Filter 14 grundsätzlich in einer beliebigen Schalldämpferteilkammer 56 angeordnet sein. Zusätzlich oder alternativ kann der Filter 14 nur abschnittsweise, d.h. nicht vollständig, in einer Schalldämpferteilkammer 56 aufgenommen sein und/oder sich durch mehrere Schalldämpferteilkammern 56 hindurch erstrecken.

Der Filter 14 kann hierbei an einer beliebigen Stelle innerhalb der an die stromaufwärtige Stirnwand 20 angrenzende Schalldämpferteilkammer 56 und/oder im Gehäuseinneren 18 angeordnet sein.

Im Betrieb des Kraftfahrzeugs strömt das Abgas 32 durch den Schalldämpfer 10 von der Einlassöffnung 22 über die erste Abgasleitung 48 zuerst durch den Filtermonolith 38 und anschließend über die zweite Abgasleitung 52 durch die Schalldämpferkammer 16 zur Auslassöffnung 26. Dabei wird das Abgas 32 im Filtermonolithen 38 behandelt bzw. gefiltert und anschließend über die Kopplung mit den Schalldämpferteilkammern 56 gedämpft.

In der dargestellten Ausführungsform erstreckt sich die zweite Abgasleitung 52 von dem Filter 14 geschlossen, d.h. ohne Perforation 58, durch die an den Filter 14 angrenzende Zwischenwand 54 bis in die benachbarte, in Strömungsrichtung S zweite Schalldämpferteilkammer 56, mit der die zweite Abgasleitung 52 über die Perforation 58 strömungsmäßig gekoppelt ist. Hierdurch ist das Abgas 32 mit der Schalldämpferteilkammer 56, die den Filter 14 umgibt, nur über die zweite Schalldämpferteilkammer 56 strömungsmäßig gekoppelt.

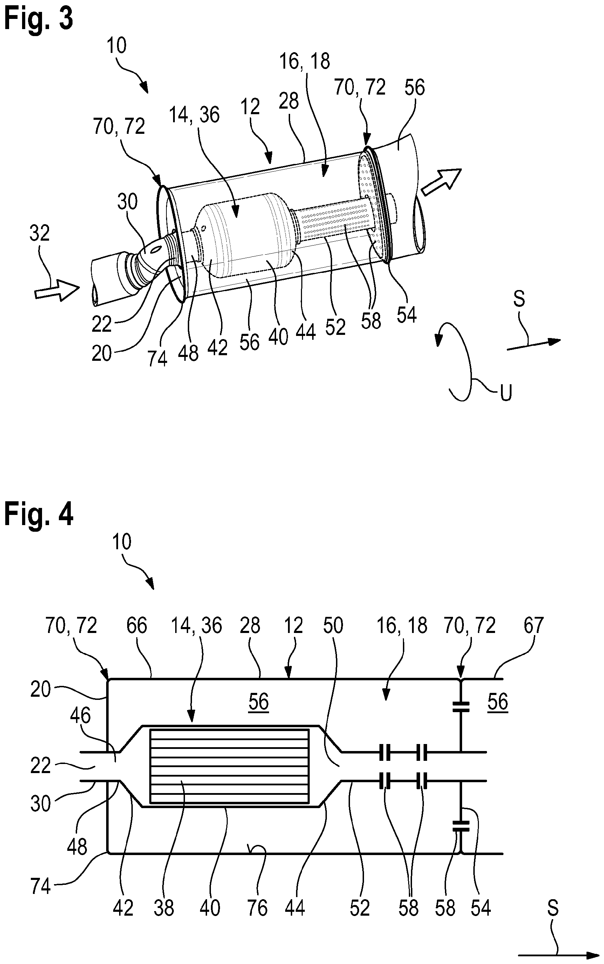

Anhand der Figuren 3 bis 5 und 7 werden nun Schalldämpfer 10 gemäß weiteren Ausführungsformen beschrieben. Für die Bauteile, die von der obigen Ausführungsform bekannt sind, werden dieselben Bezugszeichen verwendet und es wird insoweit auf die vorangegangenen Erläuterungen verwiesen.

In den Figuren 3 und 4 ist ein Schalldämpfer 10 gemäß einer zweiten Ausführungsform beschrieben.

In diese Ausführungsform ist die zweite Abgasleitung 52, in ihrem Abschnitt zwischen dem Filter 14 und der angrenzenden Zwischenwand 54 perforiert, sodass das Abgas 32 direkt über die Perforation 58 mit der den Filter 14 umgebenden Schalldämpferteilkammer 56 strömungsmäßig gekoppelt ist.

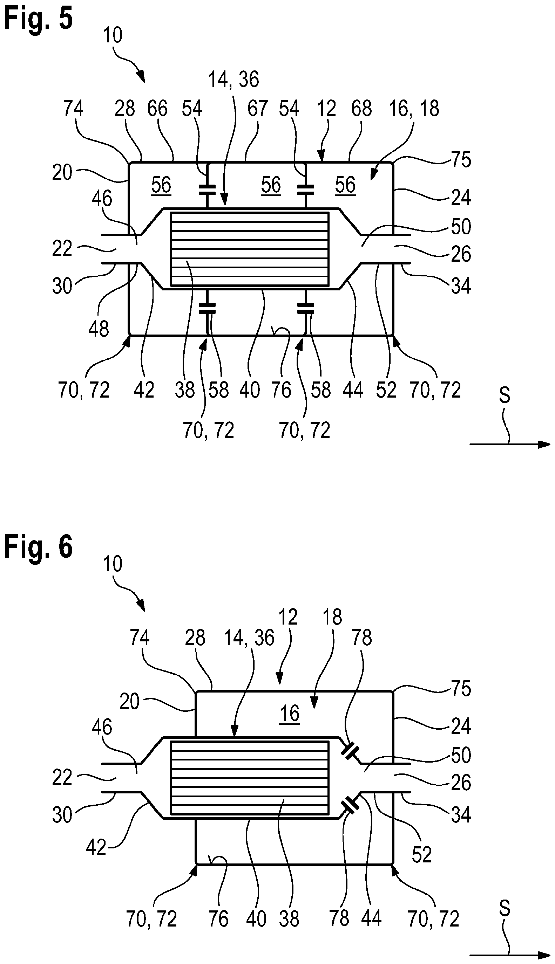

In Figur 5 ist ein Schalldämpfer 10 gemäß einer dritten Ausführungsform gezeigt, bei der sich der Filtermonolith 38 sowie das Monolithgehäuse 36 durch mehrere Schalldämpferteilkammern 56 hindurch erstrecken.

Die Zwischenwände 54 sind hierbei radial innenseitig an dem Gehäuseaußenmantel 40 befestigt.

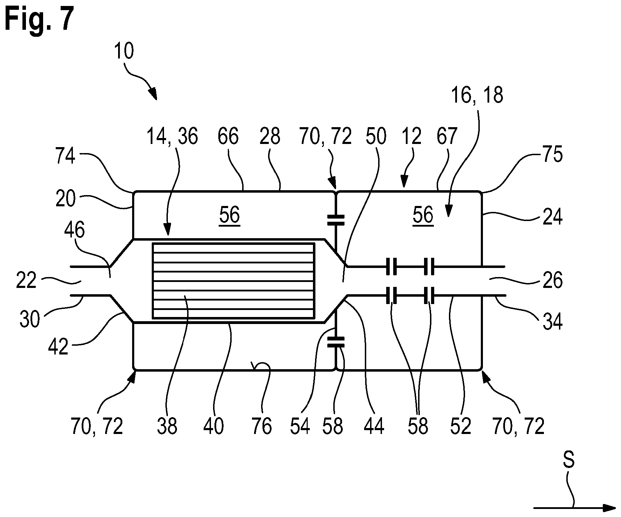

Während in den in den Figuren 1 bis 5 dargestellten Ausführungsformen der Filter 14 jeweils vollständig im Gehäuseinneren 18 aufgenommen ist, ist der Filter 14 in den folgenden in den Figuren 6 und 7 dargestellten Ausführungsformen lediglich abschnittsweise im Gehäuseinneren 18 angeordnet. Das bedeutet, der Filter 14 und sein Filtermonolith 38 ragen teilweise aus dem Außengehäuse 12 heraus.

In diesen Fällen wird die Einlassöffnung 22 des Schalldämpfers 10 durch das Monolithgehäuse 36 gebildet und die erste Abgasleitung 48 entfällt.

In Figur 6 ist ein nicht erfindungsgemäßer Schalldämpfer 10 gezeigt, bei dem sich der Filtermonolith 38 durch die stromaufwärtige Stirnwand 20 entgegen der Strömungsrichtung S aus dem Außengehäuse 12 heraus erstreckt.

Die stromaufwärtige Stirnwand 20 ist hierbei radial innenseitig an dem Gehäuseaußenmantel 40 befestigt.

Ferner weist die stromabwärtige konusförmige Stirnwand 44 des Monolithgehäuses 36 mehrere Öffnungen 78 auf, über die das im Betrieb aus dem Filtermonolithen 38 strömende Abgas 32 direkt mit der Schalldämpferkammer 16 strömungsmäßig gekoppelt ist.

In Figur 7 ist ein Schalldämpfer 10 gemäß einer vierten Ausführungsform gezeigt, bei dem sich das Monolithgehäuse 36 durch die stromaufwärtige Stirnwand 20 entgegen der Strömungsrichtung S aus dem Außengehäuse 12 heraus erstreckt, wobei der Filtermonolith 38 jedoch vollständig im Gehäuseinneren 18 angeordnet ist.

Die stromaufwärtige Stirnwand 20 ist hierbei radial innenseitig an dem Gehäuseaußenmantel 40 befestigt.

In einer alternativen Ausführungsform kann die Stirnwand 20 radial innenseitig an der stromaufwärtigen konusförmigen Stirnwand 42 befestigt sein.

Die perforierte Zwischenwand 54 ist radial innenseitig an der stromabwärtigen konusförmigen Stirnwand 44 des Monolithgehäuses 36 befestigt.

In allen zuvor beschriebenen Ausführungsformen kann der Schalldämpfer 10 weitere Schalldämpferteilkammern 56 aufweisen, die sich an die dargestellte Schalldämpferkammer 16, insbesondere in Strömungsrichtung S, anschließen.

Der Vorteil der zuvor beschriebenen Schalldämpfer 10 ist, dass der Filter 14 zumindest abschnittsweise im Gehäuseinneren 18 des Schalldämpfers 10 angeordnet ist. Auf diese Weise kann der Abgasstrang des Kraftfahrzeugs besonders kompakt ausgeführt sein.

Ferner wird das Volumen des Gehäuseinneren 18 effizient genutzt, indem der Filter 14 von der Schalldämpferkammer 16 umgeben ist.

Des Weiteren kann durch die segmentierte Bauweise des Schalldämpfers 10 der zur Verfügung stehende Bauraum im Kraftfahrzeug effizient genutzt werden, sodass der Schalldämpfer 10 besonders leistungsstark gestaltet sein kann.

Das erfindungsgemäße Kraftfahrzeug kann einen oder mehrere der erfindungsgemäßen Schalldämpfer 10 aufweisen.

## Patentansprüche

1. Schalldämpfer (10) für einen Abgasstrang eines Kraftfahrzeugs, mit einem Außengehäuse (12), das zumindest eine Einlassöffnung (22) und zumindest eine Auslassöffnung (26) für Abgas (32) aufweist, einer Schalldämpferkammer (16) und einem abgasdurchströmten Filtermonolithen (38), wobei der Filtermonolith (38) von der Schalldämpferkammer (16) umfangsmäßig umgeben ist, wobei die Schalldämpferkammer (16) durch zumindest eine perforierte radiale Zwischenwand (54) in Schalldämpferteilkammern (56) unterteilt ist, **dadurch gekennzeichnet, dass** das Außengehäuse (12) des Schalldämpfers (10) einen Außenmantel (28) hat, der aus mehreren aneinander befestigten Einzelsegmenten (66, 67, 68) zusammengesetzt ist, wobei die Einzelsegmente (66, 67, 68) den Schalldämpferteilkammern (56) zugeordnet sind.

2. Schalldämpfer nach Anspruch 1, **dadurch gekennzeichnet, dass** der Filtermonolith (38) vollständig innerhalb der Schalldämpferkammer (16) angeordnet ist.

3. Schalldämpfer nach Anspruch 1 oder 2, **dadurch gekennzeichnet, dass** der Schalldämpfer (10) eine die Einlassöffnung (22) aufweisende stromaufwärtige Stirnwand (20) und eine die Auslassöffnung (26) aufweisende stromabwärtige Stirnwand (24) sowie einen Außenmantel (28) umfasst, der sich von der stromaufwärtigen Stirnwand (20) zur stromabwärtigen Stirnwand (24) erstreckt und diese verbindet, insbesondere dass die Schalldämpferkammer (16) einerseits von der stromaufwärtigen Stirnwand (20) und/oder der stromabwärtigen Stirnwand (24) und andererseits von dem Außenmantel (28) begrenzt wird.

4. Schalldämpfer nach Anspruch 3, **dadurch gekennzeichnet, dass** eine sich zumindest von der Einlassöffnung (22) in das Gehäuseinnere (18) erstreckende erste Abgasleitung (48) und/oder eine sich vom Filter (14) zumindest abschnittsweise zur Auslassöffnung (26) erstreckende zweite Abgasleitung (52) vorgesehen sind, die sich vorzugsweise durch ihre zugeordneten Stirnwände (20, 24) erstrecken, insbesondere dass die Schalldämpferkammer (16) in mehrere Schalldämpferteilkammern (56) unterteilt ist, wobei die zweite Abgasleitung (52) durch mehrere der Schalldämpferteilkammern (56) verläuft und abschnittsweise unterbrochen ist.

5. Schalldämpfer nach Anspruch 4, **dadurch gekennzeichnet, dass** die zweite Abgasleitung (52) über eine Perforation (58) zur Schalldämpferkammer (16) offen ist.

6. Schalldämpfer nach einem der vorhergehenden Ansprüche, **dadurch gekennzeichnet, dass** der Filtermonolith (38) umfangsseitig und stirnseitig von einem Monolithgehäuse (36) umgeben und in dem Monolithgehäuse (36) untergebracht ist, wobei die Einlassöffnung (22) strömungsmäßig direkt mit dem Inneren des Monolithgehäuses (36) gekoppelt ist, sodass Abgas (32) zuerst in das Monolithgehäuse (36) strömt, bevor es die Schalldämpferkammer (16) erreicht.

7. Schalldämpfer nach den Ansprüchen 5 und 6, **dadurch gekennzeichnet, dass** die zweite Abgasleitung (52) vom Monolithgehäuse (36) ausgeht und Gas (32) aus dem Monolithgehäuse (36) zur Auslassöffnung (26) führt.

8. Schalldämpfer nach Anspruch 7, **dadurch gekennzeichnet, dass** das Monolithgehäuse (36) eine stromaufwärtige, konusförmige und eine stromabwärtige, konusförmige Stirnwand (42, 44) hat, wobei die zweite Abgasleitung (52) von der stromabwärtigen Stirnwand (44) ausgeht und die stromabwärtige Stirnwand (44) zusätzliche Öffnungen (78) entfernt von der zweiten Abgasleitung (52) hat, die in die Schalldämpferkammer (16) münden.

9. Schalldämpfer nach einem der Ansprüche 6 bis 8, **dadurch gekennzeichnet, dass** die zumindest eine Zwischenwand (54) oder eine von mehreren Zwischenwänden (54) radial außen an einem Außenmantel (28) des Außengehäuses (12) und radial innen am Monolithgehäuse (36), insbesondere an einem Außenmantel (40) des Monolithgehäuses (36) oder an einer abgasseitigen, konischen Stirnwand (42, 44) des Monolithgehäuses (36) oder an einer Abgasleitung (48, 52), die vom Monolithgehäuse (36) ausgeht und Gas (32) aus dem Monolithgehäuse (36) zur Auslassöffnung (26) führt, befestigt ist.

10. Schalldämpfer nach einem der vorhergehenden Ansprüche, **dadurch gekennzeichnet, dass** jede Schalldämpferteilkammer (56) ihr eigenes Einzelsegment (66, 67, 68) besitzt.

11. Schalldämpfer nach einem der vorhergehenden Ansprüche, **dadurch gekennzeichnet, dass** die zumindest eine Zwischenwand (54), vorzugsweise alle Zwischenwände (54), im Bereich der Befestigung benachbarter Einzelsegmente (66, 67, 68) am Außenmantel (28) befestigt ist, insbesondere durch dasselbe Befestigungsmittel (72), mit dem die benachbarten Einzelsegmente (66, 67, 68) aneinander befestigt sind, sodass das Befestigungsmittel (72) drei Teile miteinander verbindet.

12. Schalldämpfer nach einem der vorhergehenden Ansprüche, **dadurch gekennzeichnet, dass** eine Stirnwand (20, 24) des Außengehäuses (12) radial innenseitig an einer konusförmigen Stirnwand (42, 44) des Monolithgehäuses (36) oder an einem Außenmantel (40) des Monolithgehäuses (36) befestigt ist.

13. Schalldämpfer nach einem der vorhergehenden Ansprüche, **dadurch gekennzeichnet, dass** die Schalldämpferkammer (16) eine leere Resonatorkammer oder mit Dämmmaterial gefüllt ist und vorzugsweise nicht abgasdurchströmt wird.

14. Kraftfahrzeug mit zumindest einem Schalldämpfer (10) nach einem der vorhergehenden Ansprüche.

## Claims

1. A silencer (10) for an exhaust gas system of a motor vehicle, comprising an external housing (12), which has at least one inlet opening (22) and at least one outlet opening (26) for exhaust gas (32), a silencer chamber (16) and a filter monolith (38) through which exhaust gas flows, wherein the filter monolith (38) is circumferentially surrounded by the silencer chamber (16), wherein the silencer chamber (16) is divided into silencer subchambers (56) by at least one perforated radial partition (54), **characterized in that** the external housing (12) of the silencer (10) has an outer casing (28), which is composed of several individual segments (66, 67, 68) attached to one another, wherein the individual segments (66, 67, 68) are allocated to the silencer subchambers (56).

2. The silencer according to claim 1, **characterized in that** the filter monolith (38) is arranged fully within the silencer chamber (16).

3. The silencer according to claim 1 or 2, **characterized in that** the silencer (10) comprises an upstream end wall (20) having the inlet opening (22) and a downstream end wall (24) having the outlet opening (26), as well as an outer casing (28) which extends from the upstream end wall (20) to the downstream end wall (24) and connects them, in particular **in that** the silencer chamber (16) is delimited on the one hand by the upstream end wall (20) and/or the downstream end wall (24), and on the other hand by the outer casing (28).

4. The silencer according to claim 3, **characterized in that** a first exhaust gas line (48) extending at least from the inlet opening (22) into the housing interior (18) and/or a second exhaust gas line (52) extending at least in sections from the filter (14) to the outlet opening (26) are provided, which preferably extend through their allocated end walls (20, 24), in particular **in that** the silencer chamber (16) is divided into several silencer subchambers (56), wherein the second exhaust gas line (52) runs through several of the silencer subchambers (56) and is broken in sections.

5. The silencer according to claim 4, **characterized in that** the second exhaust gas line (52) is open to the silencer chamber (16) via a perforation (58).

6. The silencer according to any of the preceding claims, **characterized in that** the filter monolith (38) is surrounded circumferentially and on the faces sides by a monolith housing (36) and is accommodated in the monolith housing (36), wherein the inlet opening (22) is directly coupled in terms of flow to the interior of the monolith housing (36), with the result that exhaust gas (32) first flows into the monolith housing (36) before it reaches the silencer chamber (16).

7. The silencer according to claims 5 and 6, **characterized in that** the second exhaust gas line (52) proceeds from the monolith housing (36) and guides gas (32) from the monolith housing (36) to the outlet opening (26).

8. The silencer according to claim 7, **characterized in that** the monolith housing (36) has an upstream, conical and a downstream, conical end wall (42, 44), wherein the second exhaust gas line (52) proceeds from the downstream end wall (44), and the downstream end wall (44) has additional openings (78) at a distance from the second exhaust gas line (52), which open into the silencer chamber (16).

9. The silencer according to any of claims 6 to 8, **characterized in that** the at least one partition (54) or one of several partitions (54) is attached radially outside to an outer casing (28) of the external housing (12) and radially inside to the monolith housing (36), in particular to an outer casing (40) of the monolith housing (36) or to an exhaust-gas-side, conical end wall (42, 44) of the monolith housing (36) or to an exhaust gas line (48, 52) which proceeds from the monolith housing (36) and guides gas (32) out of the monolith housing (36) to the outlet opening (26).

10. The silencer according to any of the preceding claims, **characterized in that** each silencer subchamber (56) has its own individual segment (66, 67, 68).

11. The silencer according to any of the preceding claims, **characterized in that** the at least one partition (54), preferably all partitions (54), is/are attached to the outer casing (28) in the region of the attachment of adjacent individual segments (66, 67, 68), in particular by the same attachment means (72) with which the adjacent individual segments (66, 67, 68) are attached to one another, with the result that the attachment means (72) connects three parts to one another.

12. The silencer according to any of the preceding claims, **characterized in that** an end wall (20, 24) of the external housing (12) is attached radially inside to a conical end wall (42, 44) of the monolith housing (36) or to an outer casing (40) of the monolith housing (36).

13. The silencer according to any of the preceding claims, **characterized in that** the silencer chamber (16) is an empty resonator chamber or is filled with insulating material and preferably does not have exhaust gas flowing through it.

14. A motor vehicle comprising at least one silencer (10) according to any of the preceding claims.

## Revendications

1. Silencieux (10) pour une ligne de gaz d'échappement d'un véhicule automobile, comprenant un boîtier extérieur (12) qui présente au moins un orifice d'entrée (22) et au moins un orifice de sortie (26) pour du gaz d'échappement (32), une chambre de silencieux (16) et un monolithe filtrant (38) traversé par des gaz d'échappement, le monolithe filtrant (38) étant circonférentiellement entouré de la chambre de silencieux (16), la chambre de silencieux (16) étant divisée en chambres partielles de silencieux (56) par au moins une paroi intermédiaire radiale perforée (54), **caractérisé en ce que** le boîtier extérieur (12) du silencieux (10) présente une enveloppe extérieure (28) qui est composée d'une pluralité de segments individuels (66, 67, 68) fixés les uns aux autres, les segments individuels (66, 67, 68) étant associés aux chambres partielles de silencieux (56).

2. Silencieux selon la revendication 1, **caractérisé en ce que** le monolithe filtrant (38) est entièrement agencé à l'intérieur de la chambre de silencieux (16).

3. Silencieux selon la revendication 1 ou 2, **caractérisé en ce que** le silencieux (10) comprend une paroi frontale amont (20) présentant l'orifice d'entrée (22), et une paroi frontale aval (24) présentant l'orifice de sortie (26), et une enveloppe extérieure (28) qui s'étend de la paroi frontale amont (20) à la paroi frontale aval (24) et les relie, en particulier **en ce que** la chambre de silencieux (16) est délimitée d'une part par la paroi frontale amont (20) et/ou la paroi frontale aval (24) et d'autre part par l'enveloppe extérieure (28).

4. Silencieux selon la revendication 3, **caractérisé en ce qu'**il est prévu une première conduite d'échappement (48) qui s'étend au moins de l'orifice d'entrée (22) dans l'intérieur de boîtier (18), et/ou une deuxième conduite d'échappement (52) qui s'étend au moins par tronçons du filtre (14) à l'orifice de sortie (26), lesquelles s'étendent de préférence à travers leurs parois frontales associées (20, 24), en particulier **en ce que** la chambre de silencieux (16) est divisée en plusieurs chambres partielles de silencieux (56), la deuxième conduite d'échappement (52) s'étendant à travers plusieurs des chambres partielles de silencieux (56) et étant interrompues par tronçons.

5. Silencieux selon la revendication 4, **caractérisé en ce que** la deuxième conduite d'échappement (52) est ouverte vers la chambre de silencieux (16) par l'intermédiaire d'une perforation (58).

6. Silencieux selon l'une des revendications précédentes, **caractérisé en ce que** le monolithe filtrant (38), circonférentiellement et du côté face frontale, est entouré d'un boîtier de monolithe (36) et est logé dans le boîtier de monolithe (36), l'orifice d'entrée (22) étant fluidiquement directement couplé à l'intérieur du boîtier de monolithe (36) de sorte que du gaz d'échappement (32) s'écoule d'abord dans le boîtier de monolithe (36) avant d'atteindre la chambre de silencieux (16).

7. Silencieux selon les revendications 5 et 6, **caractérisé en ce que** la deuxième conduite d'échappement (52) s'étend à partir du boîtier de monolithe (36) et guide du gaz (32) hors du boîtier de monolithe (36) vers l'orifice de sortie (26).

8. Silencieux selon la revendication 7, **caractérisé en ce que** le boîtier de monolithe (36) présente une paroi frontale amont conique et une paroi frontale aval conique (42, 44), la deuxième conduite d'échappement (52) s'étendant à partir de la paroi frontale aval (44), et la paroi frontale aval (44) présentant des orifices supplémentaires (78) à distance de la deuxième conduite d'échappement (52), lesquels débouchent dans la chambre de silencieux (16).

9. Silencieux selon l'une des revendications 6 à 8, **caractérisé en ce que** ladite au moins une paroi intermédiaire (54) ou l'une parmi plusieurs parois intermédiaires (54) est fixée radialement à l'extérieur à une enveloppe extérieure (28) du boîtier extérieur (12) et radialement à l'intérieur au boîtier de monolithe (36), en particulier à une enveloppe extérieure (40) du boîtier de monolithe (36) ou à une paroi frontale conique (42, 44) côté gaz d'échappement du boîtier de monolithe (36) ou à une conduite d'échappement (48, 52) qui s'étend à partir du boîtier de monolithe (36) et guide du gaz (32) hors du boîtier de monolithe (36) vers l'orifice de sortie (26).

10. Silencieux selon l'une des revendications précédentes, **caractérisé en ce que** chaque chambre partielle de silencieux (56) a son propre segment individuel (66, 67, 68).

11. Silencieux selon l'une des revendications précédentes, **caractérisé en ce que** ladite au moins une paroi intermédiaire (54), de préférence l'ensemble des parois intermédiaires (54) est fixé(e) à l'enveloppe extérieure (28) dans la zone de la fixation de segments individuels adjacents (66, 67, 68), en particulier par le même moyen de fixation (72) avec lequel les segments individuels adjacents (66, 67, 68) sont fixés les uns aux autres, de sorte que le moyen de fixation (72) relie trois pièces les unes aux autres.

12. Silencieux selon l'une des revendications précédentes, **caractérisé en ce qu'**une paroi frontale (20, 24) du boîtier extérieur (12) est fixée radialement du côté extérieur à une paroi frontale conique (42, 44) du boîtier de monolithe (36) ou à une enveloppe extérieure (40) du boîtier de monolithe (36).

13. Silencieux selon l'une des revendications précédentes, **caractérisé en ce que** la chambre de silencieux (16) est une chambre de résonateur vide ou est remplie de matière isolante et n'est, de préférence, pas traversée par des gaz d'échappement.

14. Véhicule automobile comprenant au moins un silencieux (10) selon l'une des revendications précédentes.
